# EUROPEAN PATENT SPECIFICATION

(11) **EP 0 292 974 B1**
(45) Date of publication and mention of the grant of the patent: **23.02.1994**
(21) Application number: 88108438.8
(22) Date of filing: 26.05.1988
(51) Int. Cl.: G01N 27/64, G01N 33/00

(54) **Atmospheric sampling glow discharge ionization source**
Entladungsionisierungsquelle zum Analysieren der Atmosphäre
Source à décharge ionisante pour analyser l'atmosphère

(30) Priority: 29.05.1987 US 55277
(43) Date of publication of application: 30.11.1988
(73) Proprietor: MARTIN MARIETTA ENERGY SYSTEMS, INC., Oak Ridge, TN 37831-8014 (US)
(72) Inventor: McLuckey, Scott A., Oak Ridge Tennessee 37830 (US); Glish, Gary L., Oak Ridge Tennessee 37830 (US)
(74) Representative: Thomas, Roger Tamlyn

(56) References cited:
- EP-A- 0 252 758
- US-A- 4 091 655
- US-A- 4 121 099
- JOURNAL OF APPLIED PHYSICS vol. 59, no. 6, March 1986, pages 1890-1903, Woodbury, New York, USA; B.E. THOMPSON et al.: "Ion bombardment energy distributions in radio-frequency glow-discharge systems"
- PATENT ABSTRACTS OF JAPAN vol. 11, no. 93 (P-559)(2540) 24 March 1987; & JP-A-61 245052
- ANALYTICAL CHEMISTRY vol. 58, no. 2, February 1986, pages 341A-356A , Columbus, Ohio, USA; W.W. HARRISON et al.: "Glow discarge Mass Spectrometry"

## Description

This invention relates to analyzing gaseous chemicals in the atmosphere.

Prior art systems for analyzing gaseous chemicals in the atmosphere employing an ion source and a mass spectrometer have had the serious disadvantage of either requiring very large pumping systems and frequent maintenance or having low sensitivity and frequent clogging of the interface between the ion source and the mass spectrometer. Since mass spectrometers operate under a high vacuum, it is difficult to obtain a sample of air that contains sufficient molecules of interest to detect without including a vast amount of unwanted atmospheric gases. Furthermore, it is also difficult to obtain indiscriminate ionization with prior art atmospheric ionisation devices.

Attempts at analyzing dilute gas samples have produced unsatisfactory results. In atmospheric pressure ionization (API) sources, true thermal and chemical equilibria are obtained, so that only the most thermodynamically stable ions are observed. The less stable ions are, therefore, discriminated against severely. The relatively high operating pressure of the API source increases the probability of ion-ion recombination, which is a major loss mechanism, and also tends to increase the amount of clustering. Additionally, API sources are limited by either the amount of primary ionizing electrons, or the lifetime of the needle that produces the ionizing electrons. The former limitation leads to ionization saturation at relatively high sample concentrations, and discrimination in ionization when two components are present in widely varying concentrations. The kinetics of ion formation also contribute to ion discrimination. The limited lifetime of the needle that produces ionizing electrons precludes using this type of source for routine, continuous long-term applications.

In using an API source, the sample material passes through a region where ionizing electrons are generated. The ionizing electrons can be generated either by beta particle emission from a suitable material (e.g. ⁶³Ni or ³H) or by establishing a corona discharge between two electrodes, one of which is a needle. After interacting with the ionizing electrons, the ionized molecules and their charged products are directed into a mass analyzer.

The corona discharge, which occurs at atmospheric pressure, cannot operate for long periods of time before maintenance is required. The discharge needle must be replaced every twenty-four to forty-eight hours due to burnout. This is a disadvantage for both remote monitoring systems and continuously operating systems.

Moreover, conventional API sources use small apertures which increase the chance of aperture clogging and require the use of a complex "gas curtain". In this regard, US Patent No. US-A-4 137 750 to French et al. discloses an apparatus for analyzing trace components using a gas curtain. The gas curtain is established between a sample gas reaction chamber and a mass analyzer. A sample gas containing trace components is ionized in the reaction chamber which is maintained at atmospheric pressure. The ionized trace components are caused to migrate through the gas curtain by an electric field and separated from the sample gas. The gas curtain must be maintained at a pressure above atmospheric pressure so that no sample gas leaks into the mass analyzer.

Additionally, in the prior art the sensitivity of an API source using a beta emitter has not been adequate for trace atmospheric gas sampling. This is due to the radioactive nature of the beta emitter, which limits the amount that can safely be handled and thus the number of ionizing electrons. An example of an API source of this type of ionisation is disclosed in US-A-4 121 099.

A different ionization source, chemical ionization (CI), operates at subatmospheric pressure but also requires frequent rebuilding of the electron source, as noted with the corona discharge API source. CI is primarily used for organic chemical analysis and is not used for direct atmospheric sampling.

Glow discharge ionization sources for mass spectrometers have heretofore been used only for inorganic chemical analysis. Typically, it is required that an electrode be made of a solid sample, such as a solid inorganic substance. Examples of conventional ion source electrode configurations are illustrated in W. H. Harrison et al., "Glow Discharge Mass Spectrometry", Analytical Chemistry, Volume 58, No. 2, pages 314A to 356A, February 1986.

JOURNAL OF APPLIED PHYSICS, Volume 59, Number 6, March 1986, pages 1890-1903, Woodbury, New York, USA; B E THOMPSON et al, "Ion bombardment energy distribution in radio-frequency glow-discharge systems" discloses a plasma etching apparatus of the type used in the manufacture of semiconductor devices. A radio frequency field induces a glow discharge in the gas within an etching chamber. The highly reactive ions within this glow discharge then etch the surface under treatment. This document is particularly concerned with the investigation of the nature of the ion species at the etching surface. Ions pass through a small orifice in the etching chamber wall into a quadruple mass spectrometer for analysis.

European Patent Application EP-A-0 252 758 (not published at the priority date and so relevant only for the purposes of novelty under Article 54(3) EPC) discloses an apparatus for the analysis of the eluent of a liquid chromatograph. The liquid eluent is introduced via an initial heating stage.

There is a need in the art for an ionization source for use with an atmospheric gas sampling instrument having high sensitivity and reduced tendency to discriminate against less stable ions. In addition, there is a need for a portable monitoring system that can operate in remote areas for extended periods of time before maintenance is required. There is also a need for an ionization source which can accept a gaseous sample directly from the environment and operate at subatmospheric pressure.

According to one aspect of the invention there is provided gaseous atmospheric chemicals analyzing apparatus, the apparatus comprising an ionization chamber and an analyzer which operates under vacuum, said ionization chamber having an inlet and an outlet, said inlet directly communicating with the atmosphere for admitting an atmospheric gaseous sample to be analyzed, said outlet communicating with said analyzer, and at least one pair of spaced electrodes disposed in said chamber proximate to a sample path leading from said inlet to said outlet, characterised by means for applying a voltage difference across said electrodes to establish a glow discharge between said electrodes, and means for maintaining said chamber at a pressure below atmospheric pressure.

According to another aspect of the invention, the objects are achieved by providing a method of analyzing gaseous chemicals in the atmosphere, the method comprising the steps of:
a) providing an ionization chamber defining an inlet and an outlet, said inlet directly communicating with the atmosphere for admitting an atmospheric gaseous gas sample to be analyzed, said outlet communicating with an analyzer with operates under vacuum, and said chamber having disposed therein at least one pair of spaced electrodes proximate to a sample path leading from said inlet to said outlet;
b) maintaining the interior of said ionization chamber at subatmospheric pressure;
c) applying a voltage difference across said electrodes to induce a glow discharge between said electrodes;
d) admitting an atmospheric gas sample containing molecules to be analyzed through said inlet into said chamber, ionizing said molecules to be analyzed in said glow discharge, and directing the ionized molecules through the outlet and into the analyzer; and
e) analyzing the ionized molecules in said analyzer.

A preferred form of the apparatus embodying the invention and described herebelow provides an ionization chamber for gaseous samples for use with a mass spectrometer or other analytical device which analyzes charged particles. The preferred apparatus is capable of ionizing substances to be analyzed in the presence of normal atmospheric gases and of producing both positive and negative ions for analysis.

The preferred apparatus ionizes gaseous samples directly from ambient air and operates at a pressure below atmospheric pressure.

The invention will now be further described, by way of illustrative and non-limiting example, with reference to the accompanying drawings, wherein:
Figure 1 is a top plan view of an atmospheric sampling glow discharge ionization device connected to a mass spectrometer;
Figure 2 is a front elevational view showing a support flange for use in the atmospheric sampling glow discharge ionization source; and
Figure 3 is a side elevational view of the flange shown in Figure 2.

A preferred form of apparatus embodying the invention that will now be described provides an ionization chamber for use with mass spectrometer and other ion analysis instruments. The preferred apparatus comprises an atmospheric sampling glow discharge ionization source used in combination with an analytical instrument. The ionization source comprises a glow discharge ionization chamber having spaced electrodes disposed therein, an inlet communicating with a source of a gaseous sample to be analyzed and an outlet communicating with an analyzer. The chamber is maintained at a pressure below atmospheric pressure. Molecules passing through the inlet and contacting the glow discharge are ionized and directed through the outlet to the analyzer.

The ionization source accepts the sample directly from atmospheric pressure conditions and processes the sample directly into a high vacuum instrument, bridging the pressure gap and drawing off unwanted atmospheric gases. The atmospheric sampling glow discharge ionization source exhibits improved sensitivity and reduced discrimination against less stable ion species in the ionization of trace vapors in ambient air in real time. The improved sensitivity and reduced discrimination of this ionization source compared to other sources make mass spectrometry a more widely applicable technique for detection and identification of gaseous chemicals, particularly organic molecules, in the atmosphere.

Ions are formed by a variety of mechanisms. Positive ions are formed by electron impact near the cathode, whereby the positive ions strike the cathode and liberate other electrons thus sustaining the discharge. The phenomena of glow discharge is well-known and has been extensively studied. Conventional glow discharge technology is described in S.C. Brown, "Introduction To Electrical Discharges and Gases," John Wiley & Sons, Inc., New York, 1966, and W.W. Harrison et al., "Glow Discharge Mass Spectrometry," Analytical Chemistry, Volume 58, No. 2, pages 341A to 356A, February, 1986, which are hereby incorporated herein by reference.

The present apparatus capable of forming ions from trace contaminants in air. The trace contaminant molecules can be predominantly ionized by either electron or proton transfer from ions of much greater abundance, which are commonly referred to as reagent ions. In ambient air, positive reagent ions include O₂⁺, hydronium ion (protonated water), and protonated water clusters (H₂O)ₙH⁺ where n ≦ 5. Major negatively charged reagent ions include O₂⁻ and water adducts of the form O₂(H₂O)ₙ⁻ where n is 1, 2, or 3.

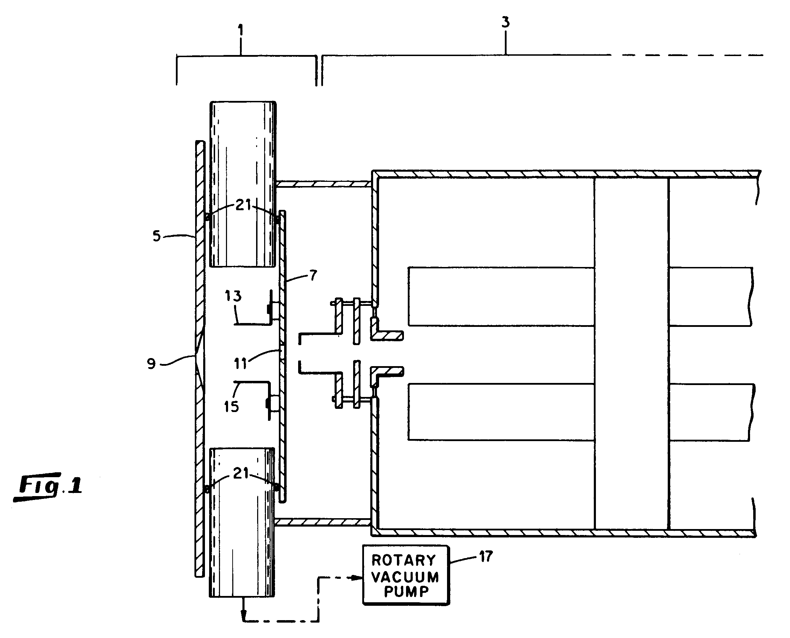

Referring to Fig. 1, an ionization chamber 1 is connected to a quadruple mass spectrometer 3. Primary plates 5 and 7 have a circular inlet aperture 9 having a diameter of 200 µm and a circular outlet aperture 11 having a diameter of 800 µm, respectively. Both the inlet aperture 9 and the outlet aperture 11 are aligned with the sample path of the mass spectrometer 3. The sample path is defined as the path that the sample travels in passing through the ionization chamber and analyzer. The ionization chamber communicates with a gaseous sample contained in the atmosphere by means of the inlet and communicates with an analyzer by means of the outlet.

A secondary plate 13 and a secondary plate 15 are spaced substantially parallel to each other and mounted on the primary plate 7 on opposite sides of the outlet aperture 11. The distance between the secondary plate 13 and the secondary plate 15, as shown in Fig. 1, is about 1.5 centimeters. The secondary plates 13 and 15 are disposed on opposite sides of and substantially equidistant from the sample path.

A voltage difference is applied in a conventional manner across at least one set of parallel plates in such a way that a glow discharge is induced between the electrodes.

The pressure in the ionization chamber is lowered to a range of between about 13.3 and 133 Pascals (about 0.1 and 1 torr) by a 15 liter per second rotary vacuum pump 17. The mass spectrometer 3 is maintained at a pressure in the range from about 0.133 to 0.00133 Pascals (about 10⁻⁴ to about 10⁻⁵ torr), preferably about 0.00666 Pascals (about 5 · 10⁻⁵ torr).

Ambient air is drawn in through the inlet aperture 9 by the vacuum and encounters the voltage difference created within the ionization chamber 1. The gaseous molecules contained in the ambient air are then ionized by the glow discharge produced by the voltage difference and directed through the outlet aperture 11 into the mass spectrometer 3.

In one embodiment a glow discharge for forming ions is established with the primary plates 5 and 7 serving as the electrodes. A voltage difference between the primary plates 5 and 7 of between about 350 and 400 volts is sufficient for a glow discharge to occur. The distance between the primary plates 5 and 7, as shown in Fig. 1, is about 2 centimeters and is not particularly critical. In this embodiment, the secondary plates 13 and 15 are held at the same potential, usually about 0 volts.

The best results are obtained when the negative glow of the discharge is nearest to the primary plate 5. This situation is established when the primary plate 5 serves as the cathode and the primary plate 7 serves as the anode. Ions which are formed in the discharge and pass through the outlet aperture 11 are focused into the mass spectrometer 3, detected and subsequently mass analyzed.

To optimize the performance of the mass spectrometer in terms of transmission and mass resolution, the primary plate 5 is normally held at between about -350 and -400 volts, and the primary plate 7 is held at about -8 volts when negative ion analysis is desired and at about +8 volts when positive ion analysis is desired.

In an alternate embodiment for forming ions, a glow discharge is established between the secondary plates 13 and 15. In this embodiment, the voltage on one primary plate 5 has very little effect on the data while the voltage on the other primary plate 7 is varied to optimize the extraction of ions from the discharge, thereby optimizing the performance of the mass spectrometer. The potentials on the secondary plates 13 and 15 are each about 200 volts and are of opposite polarity.

The secondary plate glow discharge embodiment is preferred for analyzing positive ions, whereas the primary plate glow discharge embodiment is preferred for analyzing negative ions.

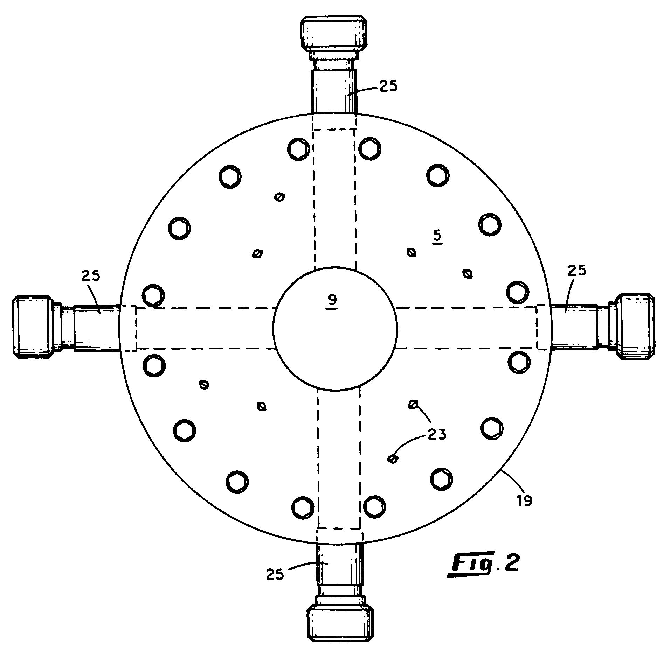

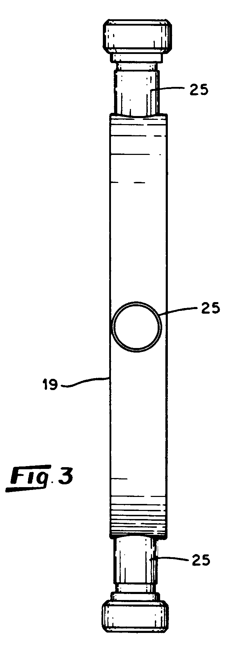

Referring to Figs. 2 and 3, the atmospheric sampling glow discharge ionization source is constructed with a 0.152m (6-inch) outer diameter support flange 19 that is apertured for drawing a vacuum. A suitable flange is sold by MDC Vacuum Products Corp. of Hayward, California, under the trademark CONFLAT ™.

The primary plate 5 having the inlet aperture 9 is attached to the outside face of the flange 19. An O-ring seal 21 is used for the vacuum seal and also to electrically isolate the primary plate 5 from the flange 19. Nylon screws 23 are used to attach the primary plate 5 to the flange 19 in order to maintain electrical isolation. The primary plate 7 having the outlet aperture 11 is attached to the vacuum side of the flange 19 in a like manner. There is a 0.044m (1.75 inch) diameter hole through the center of the flange 19 which is in the region where the glow discharge, and thus ionization, occurs. The diameter of this hole is not critical.

Pump-out ports 25 have been drilled through the side of the flange 19. In one preferred embodiment, the system has four such ports. However, as illustrated in Fig. 2, up to 16 or more ports are possible. The number of ports is a function of the magnitude of vacuum desired and the available surface area. By using more pumping ports, greater pumping speed can be obtained and thus the inlet aperture 9 can be enlarged, thereby increasing the amount of gaseous sample entering into the discharge region.

Alternate embodiments include a molecular beam-type arrangement where a glow discharge is set up between an orifice plate and skimmer or between the skimmer and a subsequent electrode. This embodiment allows for a larger sampling aperture, which should provide more sample and thus greater sensitivity. Similar improvements are possible in the design shown in Fig. 1 by using a larger inlet aperture 9 and increasing the vacuum pumping in the region between the primary plates 5 and 7.

In a further embodiment, the number of sample molecules introduced into the discharge can be increased by increasing the diameter of the inlet aperture still further and using a semi-permeable membrane over the inlet aperture which is more permeable to organic molecules than to oxygen and nitrogen. The membrane would then, in effect, reduce the pumping requirements. Additionally, a screen can be used to support the membrane and serve as an electrode.

Another embodiment also includes a double mass spectrometer configuration, whereby both positive and negative ions can be sampled simultaneously. Since many chemical species are detected with much greater sensitivity in one mode relative to the other, such a dual mass spectrometer arrangement can facilitate real-time monitoring of a wider variety of compounds than is possible using one mode at a time.

Relative concentrations of the adduct ions depend, of course, on the relative humidity. There are roughly 10⁴ collisions per ion during the ion source residence time. When the sample molecule has a higher proton affinity or electron affinity than the neutral counterparts to the reagent ions, the charge will be transferred to the sample. Due to the many collisions in the source, the charge tends to accumulate in the most stable ions.

The atmospheric sampling glow discharge ionization source is operated at pressures approximately three orders of magnitude lower than API sources. The less stable ions are therefore discriminated against less severely than with sources where true thermal and chemical equilibrium are obtained. The kinetics of ion formation also contribute to this decreased discrimination. Additionally, the relatively low pressure of the atmospheric sampling glow discharge ionization source reduces the probability of ion-ion recombination and also tends to reduce the amount of clustering.

There are at least 10¹⁰ more primary ionizing electrons in the atmospheric sampling glow discharge ionization source than in API sources which use beta emitters to provide the primary ionizing electrons. This overwhelming abundance of primary ionizing electrons provides an increase in the dynamic range since the ionization in the atmospheric sampling glow discharge ionization source is not limited by the amount of primary ionizing electrons, and thus ionization saturation does not occur even at relatively high sample concentrations. Discrimination in ionization, which may occur in conventional API sources when two contaminants are present in widely varying concentrations, is also reduced by atmospheric sampling glow discharge ionization sources for similar reasons.

When compared to API sources which use a corona discharge occurring at atmospheric pressure, the atmospheric sampling glow discharge ionization source can operate for substantially longer periods of time before maintenance is required. This factor is important for both remote monitoring systems and continuously operating systems.

The atmospheric sampling glow discharge ionization technique has demonstrated higher sensitivity than either type of API source for the compounds studied. True sensitivity comparisons for the sources cannot be made when different mass spectrometers and detectors are used. However, laboratory tests have been performed comparing a beta emitter API source with the atmospheric sampling glow discharge ionization source of the present invention. For the compounds studied, the atmospheric sampling glow discharge ionization source provides detection limits from about two to three orders of magnitude lower than the API source.

Another comparison is obtained by comparing the results of apparatus embodying the invention with the best results reported from API techniques of the type previously discussed. For a solid sample of 2,4,6-TNT as described above, an API mass spectrometer in the negative ion mode obtains a molecular anion signal of about 30,000 counts per second with a background count rate of about 1,000 counts per second. In contrast, for a solid TNT sample held near the aperture of the apparatus embodying the invention, in the negative ion mode and set at the same mass resolution indicated in the published account, the present apparatus obtains a molecular ion signal of about 400,000 counts per second with a background of about 200 counts per second. The background count rates are high in both cases and could be reduced by conventional instrument signal optimization techniques. The absolute signal strengths indicate that the atmospheric sampling glow discharge ionization is on the order of ten times more sensitive to TNT than the corona discharge API source.

The use of differential pumping and creation of a vacuum in the atmospheric sampling glow discharge ionization source enables the use of larger apertures than in conventional API sources, thus reducing the chances of the aperture clogging and also making unnecessary the addition of a complex "gas curtain".

The atmospheric sampling glow discharge ionization source can be used as an ion source for virtually any type of mass spectrometer in the analysis of most gaseous organic compounds in ambient air. Several areas of particular interest are, for example, the detection of vapors from explosive compounds, vapors from flammable liquids, and chemical warfare agents. This ionization source is also useful in systems designed to monitor air pollutants or to screen for hazardous chemical wastes.

Further understanding of the invention may be gained from consideration of the following examples which are submitted to be merely illustrative of the invention and not to limit its scope.

### Example 1

Detection of 2,4,6-TNT in simulated ambient air:
A voltage difference of approximately 400 volts is applied to primary plates 5 and 7 of an ionization chamber as described above. The pressure in the ionization chamber is reduced by application of a vacuum. The voltage application will spontaneously initiate a glow discharge at a source pressure of 93 Pascals (0.93 millibar) with a typical discharge current of 1 milliamp.

Ambient air containing a gaseous sample of 2,4,6-TNT is simulated by placing a small vial or jar containing 2,4,6-TNT at the end of a short length of (0.00635m) (1/4 inch) O.D. stainless steel tubing and butting up the other end against the inlet aperture 9. The tubing provides for the sampling of the head space vapor over the 2,4,6-TNT in the vial thus directing the gaseous sample towards the glow discharge source.

The gaseous 2,4,6-TNT molecules passing through the inlet are ionized upon contact with the glow discharge. The ionized particles are directed through the outlet and into a mass spectrometer to the detector. The various focusing controls are adjusted in a conventional manner to maximize the signal reaching the detector, keeping the resolution of the mass spectrometer at unity. In addition to focusing the mass spectrometer, the voltage difference between the two electrodes of the glow discharge is adjusted to maximize the signal intensity.

### Example 2

The procedure of Example 1 is repeated except that voltage is applied to secondary plates 13 and 15 to induce ionizing glow discharge, and instead of drawing the gas sample through the stainless steel tube, the open vial of 2,4,6-TNT is simply held near the ionization chamber inlet so that sample vapors may be drawn into the inlet.

## Claims

1. Gaseous atmospheric chemicals analyzing apparatus, the apparatus comprising an ionization chamber (1) and an analyzer (3) which operates under vacuum, said ionization chamber having an inlet (9) and an outlet (11), said inlet directly communicating with the atmosphere for admitting an atmospheric gaseous sample to be analyzed, said outlet communicating with said analyzer, and at least one pair of spaced electrodes (5, 7; 13, 15) disposed in said chamber proximate to a sample path leading from said inlet to said outlet, characterised by means for applying a voltage difference across said electrodes to establish a glow discharge between said electrodes, and means (17) for maintaining said chamber at a pressure below atmospheric pressure.

2. Gaseous atmospheric chemicals analyzing apparatus according to Claim 1, wherein said means for establishing a glow discharge is operative to apply a voltage difference in the range from about 350 to 400 volts between said electrodes.

3. Gaseous atmospheric chemicals analyzing apparatus according to Claim 1, wherein said one pair of electrodes comprises two primary plates (5, 7) spaced apart and substantially parallel to each other, one of said primary plates (5) having an opening therein defining said inlet (9) and the other of said primary plates (7) having an opening therein defining said outlet (11), said inlet and said outlet of said ionization chamber (1) being linearly aligned with a sample path in said analyzer (2).

4. Gaseous atmospheric chemicals analyzing apparatus according to Claim 3, wherein said inlet (9) has a diameter of about 200 µm, said outlet (11) has a diameter of about 800 µm, and said primary plates (5, 7) are spaced apart a distance equal to about 2 centimetres.

5. Gaseous atmospheric chemicals analyzing apparatus according to Claim 3, comprising a pair of secondary electrodes (13, 15) comprising two secondary plates (13, 15) spaced apart and substantially parallel to each other, said secondary plates being disposed between said primary plates (5, 7) and on opposite sides of and substantially equidistant from said sample path, said secondary plates being spaced apart a distance equal to about 1.5 centimetres.

6. Gaseous atmospheric chemicals analyzing apparatus according to Claim 1, wherein said means (17) for maintaining said ionization chamber (1) at a pressure below atmospheric pressure provides a pressure in the range of from about 13.3 to about 133 Pascals (about 0.1 to about 1 torr).

7. Gaseous atmospheric chemicals analyzing apparatus according to Claim 6, wherein said means (17) for maintaining said ionization chamber (1) at a pressure below atmospheric pressure comprises a rotary vacuum pump (17).

8. Gaseous atmospheric chemicals analyzing apparatus according to Claim 1, wherein said analyzer (3) is a mass spectrometer (3).

9. Gaseous atmospheric chemicals analyzing apparatus according to Claim 8, wherein said mass spectrometer (3) operates at a pressure from about 0.0133 to about 0.00133 Pascals (about 10⁻⁴ to about 10⁻^{⁵} torr).

10. Gaseous atmospheric chemicals analyzing apparatus according to Claim 5, wherein said voltage difference to establish said glow discharge is applied between said primary plates (5, 7), a first said primary plate (5) having the opening defining the inlet (9) being a cathode and a second said primary plate (7) having the opening defining the outlet (11) being an anode, said cathode having a potential of between about -350 volts and -400 volts and said anode, when negative ion analysis is desired, having a potential of about -8 volts, and when positive ion analysis is desired, having a potential of about +8 volts.

11. Gaseous atmospheric chemicals analyzing apparatus according to Claim 5, wherein said voltage difference to establish said glow discharge is applied between said secondary plates (13, 15), the potential at one of said secondary plates (13, 15) being about +200 volts and the potential at the other of said secondary plates (13, 15) being about -200 volts, when positive ion analysis is desired.

12. A method of analyzing gaseous chemicals in the atmosphere, the method comprising the steps of:
a) providing an ionization chamber (1) defining an inlet (9) and an outlet (11), said inlet directly communicating with the atmosphere for admitting an atmospheric gaseous gas sample to be analyzed, said outlet communicating with an analyzer (3) with operates under vacuum, and said chamber having disposed therein at least one pair of spaced electrodes (5, 7; 13, 15) proximate to a sample path leading from said inlet to said outlet;
b) maintaining the interior of said ionization chamber at subatmospheric pressure;
c) applying a voltage difference across said electrodes to induce a glow discharge between said electrodes;
d) admitting an atmospheric gas sample containing molecules to be analyzed through said inlet into said chamber, ionizing said molecules to be analyzed in said glow discharge, and directing the ionized molecules through the outlet and into the analyzer; and
e) analyzing the ionized molecules in said analyzer.

13. A method according to Claim 12, wherein said one pair of electrodes (5, 7; 13, 15) comprises two primary plates (5, 7) spaced apart and substantially parallel to each other, one of said primary plates (5) having an opening defining said inlet (9) and the other of said primary plates (7) having an opening defining said outlet (11), said voltage differences being in the range from about 350 to 400 volts.

14. A method according to Claim 13, wherein said ionization chamber (1) further comprises a second pair of electrodes (13, 15) comprising two secondary plates (13, 15) spaced apart and substantially parallel to each other, said secondary plates being disposed between said primary plates (5, 7) and on opposite sides of and substantially equidistant from said sample path.

15. A method according to Claim 12, wherein said means (17) for maintaining said ionization chamber (1) at a pressure below atmospheric pressure provides a pressure in the range of from about 13.3 to about 133 Pascals (about 0.1 to about 1 torr).

16. A method according to Claim 12, wherein said analyzer (3) is a mass spectrometer (3).

17. A method according to Claim 14, wherein said voltage difference is applied between said primary plates (5, 7) to establish said glow discharge, said one primary plate (5) having the opening defining the inlet (9) being a cathode and said other primary plate (7) having the opening defining the outlet (11) being an anode.

18. A method according to Claim 17, for negative ion analysis, wherein said cathode has a potential of between about -350 volts and -400 volts and said anode has a potential of about -8 volts.

19. A method according to Claim 17, for positive ion analysis, wherein said cathode has a potential of between about -350 volts and -400 volts and said anode has a potential of about +8 volts.

20. A method according to Claim 14, wherein said voltage difference is applied between said secondary plates (13, 15) to establish said glow discharge and wherein the potential at one of said secondary plates (13, 15) is about +200 volts and the potential at the other of said secondary plates (13, 15) is about -200 volts.

## Patentansprüche

1. Vorrichtung zur Analyse von gasförmigen Chemikalien in der Atmosphäre, wobei die Vorrichtung eine Ionisierungskammer (1) und einen Analysator (3) aufweist, der unter Vakuum arbeitet, wobei die Ionisierungskammer einen Einlaß (9) und einen Auslaß (11) hat, der Einlaß unmittelbar mit der Atmosphäre in Verbindung steht, um eine zu analysierende, gasförmige Atmosphärenprobe einzulassen, der Auslaß mit dem Analysator in Verbindung steht und zumindest ein Paar von voneinander beabstandeten Elektroden (5, 7; 13, 15) in der Kammer in der Nähe eines Probenweges angeordnet ist, der von dem Einlaß zu dem Auslaß führt, gekennzeichnet durch Einrichtungen zum Anlegen einer Spannungsdifferenz an den Elektroden, um eine Glimmentladung zwischen den Elektroden bereitzustellen, und Einrichtungen (17), um die Kammer auf einem Druck unterhalb des Atmosphärendruckes zu halten.

2. Vorrichtung zur Analyse von gasförmigen Chemikalien in der Atmosphäre nach Anspruch 1, wobei die Einrichtung zum Bereitstellen einer Glimmentladung so betreibbar ist, daß sie eine Spannungsdifferenz im Bereich von etwa 350 bis 400 Volt zwischen den Elektroden aufbringt.

3. Vorrichtung zur Analyse von gasförmigen Chemikalien in der Atmosphäre nach Anspruch 1, wobei das eine Paar von Elektroden zwei Primärplatten (5,7) aufweist, die voneinander beabstandet und im wesentlichen parallel zueinander sind, wobei eine der Primärplatten (5) eine Öffnung aufweist, welche den Einlaß (9) definiert, und die andere der Primärplatten (7) eine Öffnung aufweist, welche den Auslaß (11) definiert, wobei Einlaß und Auslaß der Ionisierungskammer (1) in einer Linie mit einem Strömungsweg in dem Analysator (2) ausgerichtet sind.

4. Vorrichtung zur Analyse gasförmiger Chemikalien in der Atmosphäre nach Anspruch 3, wobei der Einlaß (9) einen Durchmesser von etwa 200 µm und der Auslaß (11) einen Durchmesser von 800 µm hat, und wobei die Primärplatten (5,7) voneinander um etwa 2 cm beabstandet sind.

5. Vorrichtung zur Analyse gasförmiger Chemikalien in der Atmosphäre nach Anspruch 3, weiche ein Paar von Sekundärelektroden (13,15) hat, die zwei Sekundärplatten (13, 15) aufweisen, welche voneinander beabstandet und im wesentlichen parallel zueinander sind, wobei die Sekundärplatten zwischen den Primärplatten (5,7) und auf gegenüberliegenden Seiten von dem Probenweg und im wesentlichen in gleichen Abständen von diesen angeordnet sind, wobei die Sekundärplatten voneinander um etwa 1,5 cm voneinander beabstandet sind.

6. Vorrichtung zur Analyse gasförmiger Chemikalien in der Atmosphäre nach Anspruch 1, wobei die Einrichtung (17), die dazu dient, die Ionisierungskammer (1) auf einem Druck unterhalb des Atmosphärendruckes zu halten, einen Druck im Bereich von etwa 13,3 bis etwa 133 Pascal (etwa 0,1 bis etwa 1 Torr) bereitstellt.

7. Vorrichtung zur Analyse gasförmiger Chemikalien in der Atmosphäre nach Anspruch 6, wobei die Einrichtung (7), die dazu dient, die Ionisierungskammer (1) auf einem Druck unterhalb des Atmosphärendruckes zu behalten, eine Rotationsvakuumpumpe (17) aufweist.

8. Vorrichtung zur Analyse gasförmiger Chemikalien in der Atmosphäre nach Anspruch 1, wobei der Analysator (3) ein Massenspektrometer (3) ist.

9. Vorrichtung zur Analyse gasförmiger Chemikalien in der Atmosphäre nach Anspruch 8, wobei das Massenspektrometer (3) bei einem Druck zwischen etwa 0,0133 bis etwa 0,00133 Pscal (etwa 10⁻⁴ bis etwa 10⁻⁵ Torr) arbeitet.

10. Vorrichtung zur Analyse gasförmiger Chemikalien in der Atmosphäre nach Anspruch 5, wobei die Spannungsdifferenz für das Bereitstellen der Glimmentladung zwischen den Primärplatten (5,7) angelegt ist, wobei eine erste der Primäplatten (5), welche die Öffnung aufweist, die den Einlaß (9) definiert, eine Kathode ist und die zweite der Primärplatten (7), welche die Öffnung hat, die den Auslaß (11) definiert, eine Anode ist, wobei die Kathode ein Potential zwischen etwa -350 Volt und -400 Volt aufweist und die Anode, falls eine Analyse negativer Ionen erwünscht ist, ein Potential von etwa -8 Volt hat, und wenn eine Analyse positiver Ionen erwünscht ist, ein Potential von etwa +8 Volt hat.

11. Vorrichtung zur Analyse gasförmiger Chemikalien in der Atmosphäre nach Anspruch 5, wobei die Spannungsdifferenz für die Bereitstellung der Glimmentladung zwischen den Sekundärplatten (13,15) angelegt wird und wobei das Potential an einer der Sekundärplatten (13,15) etwa +200 Volt und das Potential an der anderen der Sekundärplatten (13,15) etwa -200 Volt beträgt, wenn eine Analyse positiver Ionen erwünscht ist.

12. Verfahren zum Analysieren gasförmiger Chemikalien in der Atmosphäre, wobei das Verfahren die Schritte aufweist:
a) Bereitstellen einer Ionisierungskammer (1), welche einen Einlaß (9) und einen Auslaß (11) definiert, wobei der Einlaß unmittelbar mit der Atmosphäre in Verbindung steht, um eine zu analysierende, gasförmige Probe der Atmosphäre einzulassen, der Auslaß mit einem Analysator (3) in Verbindung steht, der unter Vakuum arbeitet, und in der Kammer zumindest ein Paar von voneinander beabstandeten Elektroden (5, 7; 13, 15) in der Nähe eines Probenweges angeordnet ist, welcher von dem Einlaß zu dem Auslaß führt,
b) Aufrechterhalten eines Druckes unterhalb des Atmosphärendruckes im Inneren der Ionisierungskammer,
c) Anlegen einer Spannungsdifferenz an den Elektroden, um eine Glimmentladung zwischen den Elektroden zu induzieren,
d) Einlassen einer atmosphärischen Gasprobe, welche zu analysierende Moleküle enthält, und zwar durch den Einlaß in die Kammer, Ionisieren der zu analysierenden Moleküle in der Glimmentladung und Führen der ionisierten Moleküle durch den Auslaß und in den Analysator, und
e) Analysieren der ionisierten Moleküle in dem Analysator.

13. Verfahren nach Anspruch 12, wobei das eine Paar von Elektroden (5, 7; 13, 15) zwei Primärplatten (5, 7) aufweist, die voneinander beabstandet und im wesentlichen parallel zueinander sind, wobei eine der Primärplatten (5) eine Öffnung hat, welche den Einlaß (9) definiert, und die andere der Primärplatten (7) eine Öffnung hat, welche den Auslaß (11) definiert, wobei die Spannungsdifferenzen im Bereich von etwa 350 bis 400 Volt liegen.

14. Verfahren nach Anspruch 13, wobei die ionisierungskammer (1) weiterhin ein Paar von Elektroden (13, 15) hat, welches zwei Sekundärplatten (13, 15) aufweist, die voneinander beabstandet und im wesentlichen parallel zueinander sind, wobei die Sekundärplatten zwischen den Primärplatten (5, 7) und auf gegenüberliegenden Seiten von dem Probenweg und in im wesentlichen gleichen Abständen von diesem angeordnet sind.

15. Verfahren nach Anspruch 12, wobei die Einrichtung (17) zum Aufrechterhalten eines Druckes unterhalb des Atmosphärendruckes in der Ionisierungskammer (1) einen Druck im Bereich von etwa 13,3 bis etwa 133 Pascal (etwa 0,1 bis etwa 1 Torr) bereitstellt.

16. Verfahren nach Anspruch 12, wobei der Analysator (3) ein Massenspektrometer (3) ist.

17. Verfahren nach Anspruch 14, wobei die Spannungsdifferenz zwischen den Primärplatten (5,7) angelegt wird, um die Glimmentladung bereitzustellen, wobei eine Primärplatte (5), welche die den Einlaß (9) definierende Öffnung hat, eine Kathode ist, und die andere Primärplatte (7), welche die den Auslaß (11) definierende Öffnung hat, eine Anode ist.

18. Verfahren nach Anspruch 17 für eine Analyse negativer Ionen, wobei die Kathode ein Potential zwischen etwa -350 Volt und -400 Volt hat, und die Anode ein Potential von etwa -8 Volt hat.

19. Verfahren nach Anspruch 17 für die Analyse positiver Ionen, wobei die Kathode ein Potential zwischen etwa -350 Volt und -400 Volt hat und die Anode ein Potential von etwa +8 Volt hat.

20. Verfahren nach Anspruch 14, wobei die Spannungsdifferenz zwischen den Sekundärplatten (13, 15) angelegt wird, um die Glimmentladung bereitzustellen, und wobei das Potential an einer der Sekundärplatten (13, 15) etwa +200 Volt beträgt und das Potential an der anderen der Sekundärplatten (13, 15) etwa -200 Volt beträgt.

## Revendications

1. Appareil pour l'analyse des produits chimiques gazeux de l'atmosphère, l'appareil comprenant une chambre d'ionisation (1) et un analyseur (3) qui fonctionne sous vide, ladite chambre d'ionisation comportant une entrée (9) et une sortie (11), ladite entrée communiquant directement avec l'atmosphère pour l'admission d'un échantillon gazeux atmosphérique à analyser, ladite sortie communiquant avec ledit analyseur, et au moins une paire d'électrodes espacées (5,7 ; 13,15) disposées dans ladite chambre à proximité d'un passage pour échantillons allant de ladite entrée à ladite sortie, caractérisé par des moyens pour appliquer une différence de potentiel entre lesdites électrodes et établir une décharge lumineuse entre lesdites électrodes, et des moyens (17) pour maintenir ladite chambre sous une pression inférieure à la pression atmosphérique.

2. Appareil d'analyse des produits chimiques gazeux de l'atmosphère selon la revendication 1, dans lequel ledit moyen pour établir une décharge lumineuse permet d'appliquer une différence de potentiel située entre environ 350 et environ 400 volts entre lesdites électrodes.

3. Appareil d'analyse des produits chimiques gazeux de l'atmosphère selon la revendication 1, dans lequel ladite première paire d'électrodes comprend deux plaques primaires (5, 7) espacées l'une de l'autre et sensiblement parallèles entre elles, la première desdites plaques primaires (5) présentant une ouverture qui délimite ladite entrée (9) et l'autre desdites plaques primaires (7) présentant une ouverture qui définit ladite sortie (11), ladite entrée et ladite sortie de ladite chambre d'ionisation (1) étant linéairement alignées avec un passage d'un échantillon dans ledit analyseur (2).

4. Appareil d'analyse de produits chimiques gazeux de l'atmosphère selon la revendication 3, dans lequel ladite entrée (9) a un diamètre d'environ 200 µm, ladite sortie (11) un diamètre d'environ 800 µm, et lesdites plaques primaires (5, 7) sont éloignées d'une distance égale à environ 2 cm.

5. Appareil d'analyse de produits chimiques gazeux de l'atmosphère selon la revendication 3, comprenant une paire d'électrodes secondaires (13, 15) constituées par deux plaques secondaires (13, 15) espacées l'une de l'autre et sensiblement parallèles entre elles, lesdites plaques secondaires étant disposées entre lesdites plaques primaires (5, 7) et sur des côtés opposés et sensiblement à égale distance dudit passage de l'échantillon, lesdites plaques secondaires étant écartées d'une distance égale à environ 1,5 cm.

6. Appareil d'analyse de produits chimiques gazeux de l'atmosphère selon la revendication 1, dans lequel ledit moyen (17) pour maintenir ladite chambre d'ionisation (1) à une pression inférieure à la pression atmosphérique établit une pression allant d'environ 13,3 à environ 133 Pascals (environ 0,1 à environ 1 torr).

7. Appareil d'analyse de produits chimiques gazeux de l'atmosphère selon la revendication 6, dans lequel ledit moyen (17) pour maintenir ladite chambre d'ionisation (1) a une pression inférieure à la pression atmosphérique, comprend une pompe à vide rotative (17).

8. Appareil d'analyse de produits chimiques gazeux de l'atmosphère selon la revendication 1, dans lequel ledit analyseur (3) est un spectromètre de masse (3).

9. Appareil d'analyse de produits chimiques gazeux de l'atmosphère selon la revendication 8, dans lequel ledit spectromètre de masse (3) fonctionne sous une pression allant d'environ 0,0133 à environ 0,00133 Pascal (environ 10⁻⁴ à 10⁻⁵ torr).

10. Appareil d'analyse de produits chimiques gazeux de l'atmosphère selon la revendication 5, dans lequel ladite différence de potentiel destinée à établir ladite décharge lumineuse est appliquée entre lesdites plaques primaires (5, 7), une première plaque primaire (5) qui présente l'ouverture constituant l'entrée (9) est une cathode et une seconde plaque primaire (7) qui présente l'ouverture constituant la sortie (11) est une anode, ladite cathode ayant un potentiel compris entre environ -350 V et -400 V et ladite anode, lorsque l'on souhaite analyser des ions négatifs, ayant un potentiel d'environ -8 V, et un potentiel d'environ +8 V lorsque l'on souhaite analyser des ions positifs.

11. Appareil d'analyse de produits chimiques gazeux de l'atmosphère selon la revendication 5, dans lequel ladite différence de potentiel établissant ladite décharge lumineuse est appliquée entre lesdites plaques secondaires (13, 15), le potentiel sur une desdites plaques secondaires (13, 15) étant d'environ +200 V et le potentiel de l'autre desdites plaques secondaires (13, 15) étant d'environ -200 V, lorsque l'on souhaite analyser des ions positifs.

12. Procédé d'analyse de produits chimiques gazeux de l'atmosphère, le procédé comprenant les étapes consistant à :
a) prévoir une chambre d'ionisation (1) définissant une entrée (9) et une sortie (11), ladite entrée communiquant directement avec l'atmosphère pour admettre un échantillon des gaz atmosphériques à analyser, ladite sortie communiquant avec un analyseur (3) qui fonctionne sous vide, et à l'intérieur de ladite chambre étant disposée au moins une paire d'électrodes espacées (5, 7 ; 13, 15) à proximité d'un passage d'un échantillon allant de ladite entrée à ladite sortie ;
b) maintenir l'intérieur de ladite chambre d'ionisation sous une pression inférieure à la pression atmosphérique ;
c) appliquer une différence de potentiel entre lesdites électrodes pour induire entre lesdites électrodes une décharge lumineuse ;
d) admettre un échantillon de gaz atmosphériques contenant des molécules à analyser par ladite entrée dans ladite chambre, ioniser lesdites molécules à analyser dans ladite décharge lumineuse et orienter les molécules ionisées à travers la sortie et dans l'analyseur ; et
e) analyser les molécules ionisées dans ledit analyseur.

13. Procédé selon la revendication 12, dans lequel ladite première paire d'électrodes (5,7 ; 13, 15) comprend deux plaques primaires (5, 7) espacées l'une de l'autre et sensiblement parallèles entre elles, la première desdites plaques primaires (5) présentant une ouverture qui constitue ladite entrée (9) et l'autre desdites plaques primaires (7) présentant une ouverture qui constitue ladite sortie (11), lesdites différences de potentiel étant situées dans la plage allant de 350 à 400 V.

14. Procédé selon la revendication 13, dans lequel ladite chambre d'ionisation (1) comprend en outre une seconde paire d'électrodes (13, 15) qui constituent deux plaques secondaires (13, 15) espacées l'une de l'autre et sensiblement parallèles entre elles, lesdites plaques secondaires étant disposées entre lesdites plaques primaires (5, 7) et sur des côtés opposés et sensiblement à égale distance dudit passage de l'échantillon.

15. Procédé selon la revendication 12, dans lequel ledit moyen (17) pour maintenir ladite chambre d'ionisation (1) sous une pression inférieure à la pression atmosphérique établit une pression située dans la plage allant d'environ 13,3 à environ 133 Pascals (environ 0,1 à environ 1 torr).

16. Procédé selon la revendication 12, dans lequel ledit analyseur (3) est un spectromètre de masse (3).

17. Procédé selon la revendication 14, dans lequel ladite différence de potentiel est appliquée entre lesdites plaques primaires (5, 7) pour établir ladite décharge lumineuse, ladite première plaque primaire (5) présentant l'ouverture qui constitue l'entrée (9) est une cathode et ladite autre plaque primaire (7) présentant l'ouverture qui constitue la sortie (11) est une anode.

18. Procédé selon la revendication 17, pour l'analyse d'ions négatifs, dans lequel ladite cathode est un potentiel compris entre environ -350 V et -400 V et ladite anode a un potentiel d'environ -8 V.

19. Procédé selon la revendication 17, pour l'analyse d'ions positifs, dans lequel ladite cathode est à un potentiel compris entre environ -350 V et -400 V et ladite anode a un potentiel d'environ -8 V.

20. Procédé selon la revendication 14, dans lequel ladite différence de potentiel est appliquée entre lesdites plaques secondaires (13, 15) pour établir ladite décharge lumineuse et dans lequel le potentiel sur l'une desdites plaques secondaires (13, 15) est d'environ +200 V et le potentiel sur l'autre desdites plaques secondaires (13, 15) est d'environ -200 V.
